# EUROPEAN PATENT APPLICATION

(11) **EP 1 655 418 A2**
(43) Date of publication of application: **10.05.2006**
(21) Application number: 05110315.8
(22) Date of filing: 03.11.2005
(51) Int. Cl.: E03D 11/14

(54) **Device for wall-mounting a sanitary fixture installation structure**

(30) Priority: 04.11.2004 IT MI20042115
(71) Applicant: Oliveira & Irmao S.A., 3800 Aveiro (PT)
(72) Inventor: Moura de Oliveira, Antonio Manuel, 3800-25, Aveiro (PT)
(74) Representative: Jorio, Paolo

(57) **Abstract**

A device (10) for wall-mounting a sanitary fixture installation structure (1) has a fastening member (11) which is fixed to a wall; a locating member (12) insertable inside a portion (13) of the structure; a connecting rod (14) having an external thread (38) and inserted through the locating member into a seat (16) on the fastening member; and a lock member (17) insertable laterally inside the seat to secure the rod axially inside the seat; the seat (16) is not threaded, and the lock member (17) has a substantially C-shaped nut screw portion (43) insertable laterally inside the seat (16) to engage the thread (38) on the rod (14) and to rest axially against two opposite axial shoulders (26) inside the seat (16).

## Description

The present invention relates to a device for wall-mounting a sanitary fixture installation structure.

Sanitary fixtures are known to be installed using recessed, walled-in installation structures, which substantially comprise a metal frame with supports for the sanitary fixture being installed (e.g. a lavatory bowl, sink, etc.) and possibly auxiliary components (e.g. piping, flush tank, etc.). Installation structures of this type must be fixed to a supporting wall to ensure effective, safe support of the sanitary fixture.

Though numerous, known systems for fixing the installation structure to the wall have various drawbacks, by being fairly complicated and expensive to produce, or involving long, painstaking installation work or the use of tools, particularly to adjust the distance between the installation structure and the wall. As such, known systems are unsatisfactory in terms of both easy, low-cost production and fast, easy assembly.

It is therefore an object of the present invention to provide a device for wall-mounting a sanitary fixture installation structure, designed to eliminate the drawbacks of the known art. More specifically, it is an object of the invention to provide a device which is extremely cheap and easy to produce and install, and which permits fast, easy adjustment of the distance between the installation structure and the wall.

According to the present invention, there is provide a device for wall-mounting a sanitary fixture installation structure, comprising a fastening member which is fixed to a wall; a locating member insertable inside a portion of the structure; a connecting rod having an external thread and inserted through the locating member into a seat on the fastening member; and a lock member insertable laterally inside the seat to secure the rod axially inside the seat; the device being characterized in that the seat is not threaded, and the lock member comprises a substantially C-shaped nut screw portion insertable laterally inside the seat to engage the thread on the rod and to rest axially against two opposite axial shoulders inside the seat.

The device according to the invention is therefore extremely cheap and easy to produce and install, and permits easy, fast adjustment of the distance between the installation structure and the wall.

A non-limiting embodiment of the present invention will be described by way of example with reference to the accompanying drawings, in which:
Figure 1 shows, schematically, a sanitary fixture installation structure ready to be fitted with a wall-mounting device in accordance with the invention;
Figure 2 shows an exploded view in perspective of a device for wall-mounting a sanitary fixture installation structure in accordance with the invention;
Figure 3 shows a view in perspective of the Figure 2 device assembled.

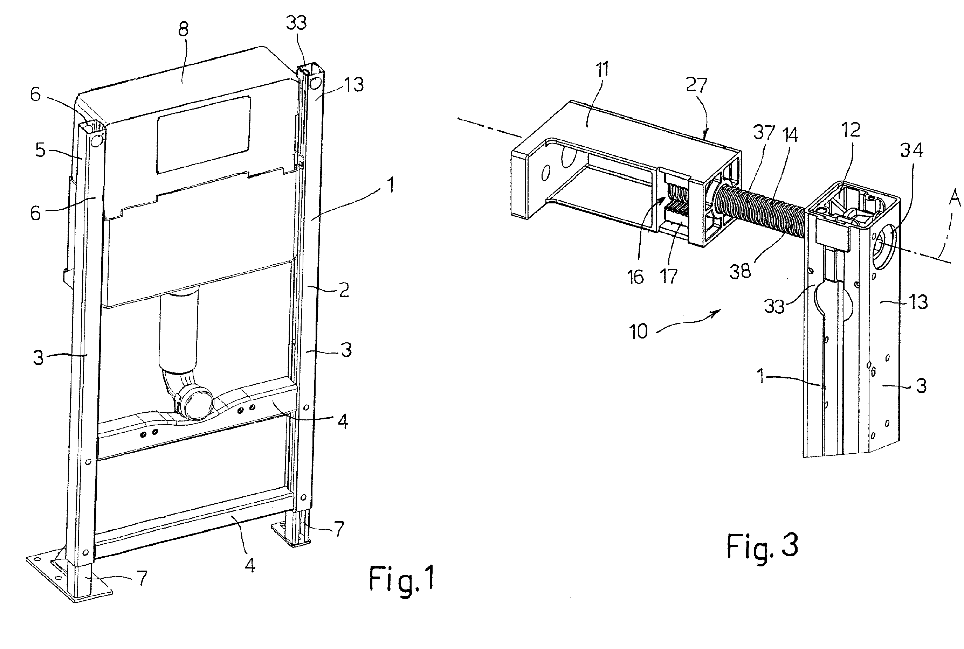

Number 1 in Figure 1 indicates an installation structure for sanitary fixtures, in particular a lavatory bowl.

Structure 1 comprises a metal frame 2 having two parallel uprights 3, and one or more cross members 4 between uprights 3. Uprights 3 are hollow, being defined, for example, by respective metal sections. More specifically, each upright 3 comprises a middle wall 5, and two lateral walls 6 parallel to each other and perpendicular to middle wall 5.

Structure 1 also comprises two legs 7 inserted telescopically and fixable at a predetermined height inside uprights 3.

In the non-limiting example in Figure 1, structure 1 is designed to support a lavatory bowl, and therefore also comprises a flush tank 8 fitted in known manner to uprights 3 of frame 2.

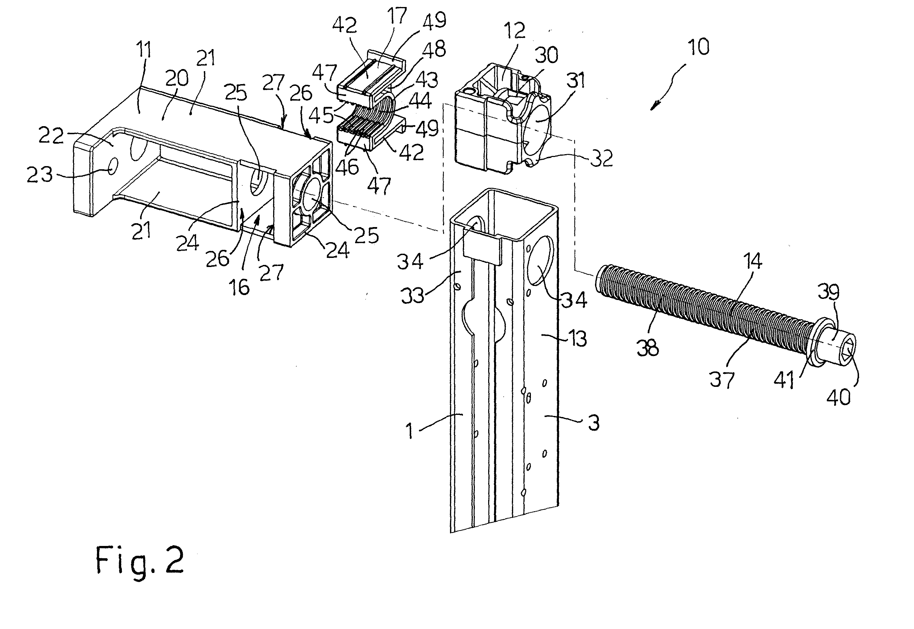

Number 10 in Figures 2 and 3 indicates as a whole a device for wall-mounting structure 1. Device 10 comprises a fastening member 11 which is fixed to a wall; a locating member 12 insertable inside a portion 13 of structure 1; a connecting rod 14 extending along an assembly axis A and inserted through locating member 12 and inside a seat 16 in fastening member 11; and a lock member 17 insertable laterally inside seat 16 to secure rod 14 axially inside seat 16.

Fastening member 11 comprises a bracket body 20 preferably made of plastic, and having two sides 21 parallel to each other and to axis A, and a plate 22 substantially perpendicular to sides 21 and to axis A and having holes 23 for wall-mounting screws.

Seat 16 is located at the opposite end of body 20 to plate 22, and is not threaded; seat 16 is bounded by respective end portions of sides 21, and by two facing walls 24 parallel to each other and to plate 22 and substantially perpendicular to sides 21 and axis A; walls 24 have respective through openings 25 aligned along axis A for the insertion of rod 14; respective facing surfaces of walls 24 define respective axially opposite shoulders 26 inside seat 16; and seat 16 has two lateral through openings 27, located between walls 24 and bounded by sides 21, for insertion of lock member 17.

Locating member 12 comprises a block 30 made of plastic material and having an inner through cavity 31, for housing rod 14, and an outer stop surface 32.

Portion 13 for housing block 30 is located at a top end 33 of upright 3; end 33 is open at the top to insert locating member 12 perpendicularly to axis A; and portion 13 has two holes 34 aligned with each other and formed through lateral walls 6 of the upright and along axis A.

Rod 14 comprises a cylindrical rod 37 with an external thread 38; and a head 39 having a hexagonal inner seat 40, and a radially outer collar 41 which cooperates, in use, with stop surface 32.

Seat 16 is not threaded, i.e. has no internal thread cooperating with thread 38 of rod 14; and rod 14 is inserted and slides freely through seat 16.

Lock member 17, preferably made of plastic material, comprises two substantially parallel arms 42, and a central, substantially C-shaped nut screw portion 43; nut screw portion 43 is threaded internally, and comprises a threaded, substantially semicylindrical inner lateral surface 44, and two flat end portions 45 projecting tangentially from opposite edges of surface 44; and portions 45 face and are parallel to each other, and have respective numbers of projections 46 substantially crosswise to axis A.

Nut screw portion 43 is located between arms 42; portions 45 are connected to arms 42 by respective front edges 47, bent 90°, of arms 42; and optional strengthening ribs 48 connect the outside of nut screw portion 43 to arms 42.

Lock member 17 is insertable laterally into seat 16 through one of lateral openings 27; arms 42 slide between sides 21, and have respective bent end edges 49 which rest against sides 21 to arrest slide of lock member 17 inside seat 16; and nut screw portion 43 is elastically deformable radially to click around rod 14 and engage thread 38.

Structure 1 is wall-mounted as follows.

Locating member 12 is inserted inside portion 13 through the open top end 33 of upright 3, and rod 14 is inserted inside and through cavity 31 through holes 34, so that collar 41 rests against stop surface 32. Rod 14 is then positioned through seat 16 (lock member 17 not being fitted inside seat 16) through openings 25, so that rod 14 slides freely along axis A inside seat 16; and, once the distance between structure 1 and the wall, to which fastening member 11 is fixed, is adjusted, lock member 17 is inserted inside seat 16 through lateral opening 27. When inserted inside seat 16, nut screw portion 43 engages thread 38 and rests axially against shoulders 26 to secure rod 14 inside seat 16.

## Claims

1. A device (10) for wall-mounting a sanitary fixture installation structure (1), comprising a fastening member (11) which is fixed to a wall; a locating member (12) insertable inside a portion (13) of the structure; a connecting rod (14) having an external thread (38) and inserted through the locating member into a seat (16) on the fastening member; and a lock member (17) insertable laterally inside the seat to secure the rod axially inside the seat; the device being **characterized in that** the seat (16) is not threaded, and the lock member (17) comprises a substantially C-shaped nut screw portion (43) insertable laterally inside the seat (16) to engage the thread (38) on the rod (14) and to rest axially against two opposite axial shoulders (26) inside the seat (16).

2. A device as claimed in Claim 1, **characterized in that** the nut screw portion (43) is elastically deformable radially to click around the rod (14).

3. A device as claimed in Claim 1 or 2,
**characterized in that** the lock member (17) comprises two arms (42), between which the nut screw portion (43) is located.

4. A device as claimed in one of the foregoing Claims, **characterized in that** the rod (14) is inserted and slides freely through the seat (16).

5. A device as claimed in one of the foregoing Claims, **characterized in that** the seat (16) has two axially aligned openings (25) for insertion of the rod (14); and a lateral opening (27) for insertion of the lock member (17).

6. A device as claimed in the foregoing Claim, **characterized in that** the seat (16) is bounded by two facing walls (24) having said axially aligned openings (25) for insertion of the rod (14); said opposite axial shoulders (26) being formed facing each other on said walls (24).

7. A device as claimed in one of the foregoing Claims, **characterized in that** the nut screw portion (43) has a substantially semicylindrical, threaded inner lateral surface (44).

8. A device as claimed in the foregoing Claim, **characterized in that** the nut screw portion (43) has two flat end portions (45) projecting tangentially from opposite edges of the threaded inner lateral surface (44); said flat end portions (45) being parallel to and facing each other, and having respective numbers of projections (46) substantially crosswise to the axis (A).
